# FASCICULE DE BREVET EUROPEEN

(11) **EP 1 496 090 B1**
(45) Date de publication et mention de la délivrance du brevet: **14.12.2011**
(21) Numéro de dépôt: 04300436.5
(22) Date de dépôt: 09.07.2004
(51) Int. Cl.: C09D 7/12

(54) **Utilisation d'un plastisol destiné à revêtir des outillages de galvanoplastie**
Verwendung eines Plastisols zur Beschichtung von Metallabscheidungswerkzeugen
Use of a plastisol for coating electroplating tools

(30) Priorité: 11.07.2003 FR 0350327
(43) Date de publication de la demande: 12.01.2005
(73) Titulaire: Serme, 94470 Boissy Saint Leger (FR)
(72) Inventeur: Renaud, Maxence, 94440 Santeny (FR)
(74) Mandataire: Catherine, Alain

(56) Documents cités:
- EP-A- 0 607 717
- FR-A- 2 456 131
- US-A- 4 656 215
- US-A- 5 135 967

## Description

La présente invention concerne le domaine des revêtements plastiques, plus particulièrement le domaine des plastisols et leur application à la protection des supports destinés à être placés dans des conditions de corrosion chimique très sévères.

L'invention concerne plus précisément un nouveau plastisol particulièrement approprié pour le revêtement de montages d'électrolyse appelés à tremper dans des bains destinés à la galvanoplastie.

L'invention a plus spécifiquement pour objet un plastisol pour revêtement de montages d'électrolyse pour la métallisation de substrats plastiques.

On rappellera qu'est couramment dénommé plastisol un mélange formé d'au moins une suspension de résine poly(chlorure de vinyle) (PVC) en poudre préparée suivant le procédé de polymérisation en émulsion (ou microsuspension) dans un plastifiant liquide, et d'adjuvants, de type stabilisants, charges, pigments, et agents gonflants.

Sous l'action de la chaleur ce plastisol se transforme en un solide homogène, vers des températures de l'ordre de 180°C.

Les plastisols sont utilisés dans des domaines très différents mais ils ont trouvé notamment une application particulière dans le domaine des revêtements de montages d'électrolyse appelés à tremper dans des bains sulfochromiques, chlorhydriques, de nickelage, de cuivrage, destinés à la galvanoplastie.

La galvanoplastie est une technique qui consiste entre autres à recouvrir par voie chimique un substrat non-conducteur avec un mince film ou revêtement conducteur puis à déposer par voie électrolytique un revêtement métallique sur le film déposé chimiquement. La galvanoplastie permet de recouvrir des substrat non conducteurs par des métaux tels que le cuivre, le nickel, le chrome, l'or, l'argent ou similaires.

Le dépôt d'un film métallique par voie chimique sur un substrat non conducteur comprend la succession d'étapes suivantes :
1. Le satinage chimique qui consiste à tremper le substrat non conducteur, une matière plastique par exemple, dans un bain de satinage destiné à former des pores ou alvéoles sub-microniques, de l'ordre du dixième de micron à la surface du substrat.
2. Le trempage du substrat ayant subi un satinage chimique dans une solution de neutralisation, ayant pour objet d'éliminer les traces de réactifs de bain de satinage sur le substrat, et en particulier les traces de chrome sur le substrat lors d'une étape de satinage dans un bain sulfochromique.
3. Le pré-trempage du substrat neutralisé dans une solution de HCl, cette étape ayant pour objet d'assurer la protection du catalyseur, typiquement du palladium colloïdal, lors de l'étape suivante,
4. La catalysation de la surface du substrat dans un bain de catalyseur colloïdal. Ce bain est réalisé autour d'un état d'équilibre entre le palladium et l'étain en milieu hydrochlorhydrique. Les alvéoles (ou pores) à la surface du substrat, rendues hydrophiles et débarrassées de chrome par étapes de neutralisation vont absorber l'étain sous forme de SnO et Sn et provoquer la précipitation du palladium.
5. L'accélération de catalyse qui consiste en une élimination des ions Sn⁴⁺ de la surface du substrat et la réduction du palladium sous forme catalytique Pd°.
6. Le dépôt chimique d'un film métallique, typiquement Ni ou Cu. Ce type de dépôt chimique d'un film métallique sur un substrat en matière plastique est bien connu de l'homme de l'art.

Une étape classique de nettoyage de la surface des substrats par des tensioactifs adaptés peut précéder l'ensemble des étapes décrites ci-dessus.

Un premier type de bain de satinage comprend les mélanges à base d'anhydride chromique. Il s'agit par exemple des satinages d'anhydride chromique et d'acide sulfurique, des satinages d'anhydride chromique et d'eau, et des satinages à base d'anhydride chromique, d'acide sulfurique et d'acide ortho-phosphorique. D'autres types de bains sont connus de l'homme du métier, tels que les satinages au permanganate et à l'hydroxyde de sodium, les satinages acides par mélange d'acides sulfurique, phosphorique, acétique ou p-toluène-sulfonique, les satinages alcalins à l'hydroxyde de sodium ou de potassium, et les satinages spécifiques : au sodium naphtalène pour le traitement des polymères fluorés, ou le satinage par des solvants ou des systèmes de solvants.

Les bains de satinage usuels sont les bains contenant un mélange sulfochromique, dont des exemples de formulation sont fournis dans l'exemple 1 et dans l'exemple 2.

D'autres bains de satinage, ne contenant pas de chrome VI, peuvent être utilisés. Parmi ceux-ci on peut citer les bains utilisant le cérium IV 0,1 M en milieu nitrique pour le satinage de polyphénylène oxydes comme le Noryl ® de la société General Electric Company et les ABS ou encore les bains comprenant un mélange d'acide. Une formulation de satinage, sans chrome, est détaillée dans l'exemple 3.

Le brevet français FR-2.456.131 déposé par la société SERME décrit un plastisol utilisé pour le revêtement de montages d'électrolyse. Ce plastisol permet d'obtenir des revêtement suffisamment satisfaisants dans la mesure où ceux-ci présentent une résistance mécanique ou physique suffisante au choc et une résistance suffisante contre la corrosion pour des conditions habituelles de galvanoplastie.

Cependant, si les plastisols connus, appelés à revêtir les outillages de galvanoplastie, comme les montages d'électrolyse, sont généralement satisfaisants, ils ont tendance à se recouvrir eux-même de métal lors des étapes de métallisation chimique.

Les outillages de galvanoplastie, recouverts de plastisol, doivent pouvoir être utilisés plusieurs fois, afin de réaliser plusieurs cycles de galvanoplastie, il existe donc un besoin dans l'état de la technique pour des plastisols qui ne soient pas altérés par un dépôt de métal à la fin de chaque cycle de métallisation chimique.

De plus, les inventeurs ont remarqué que le phénomène de métallisation du plastisol était encore plus marqué, lorsque, lors de l'étape de satinage, la concentration en anhydride chromique ou CrO₃ dans le mélange sulfochromique utilisée dans les bains de satinage diminuait.

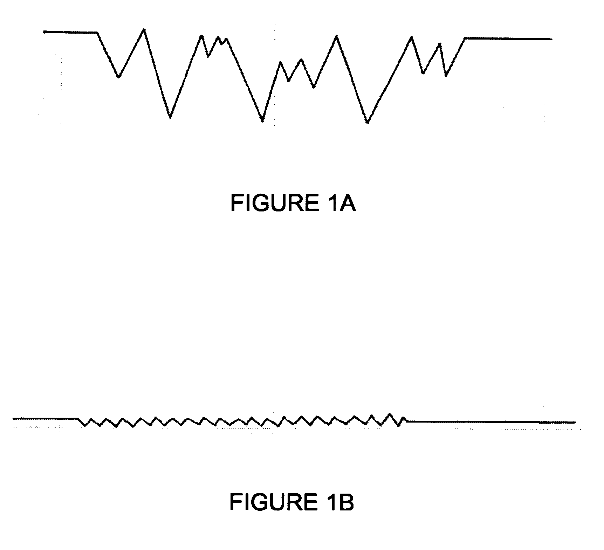

Sans vouloir être liés par une théorie particulière, les inventeurs pensent que la concentration en CrO₃ dans le mélange sulfochromique utilisée lors du satinage a une incidence sur la porosité du plastisol. En effet, comme cela est représenté sur la figure 1A, la surface d'un plastisol plongé dans un bain de satinage concentré en anhydride chromique (par exemple de l'ordre de 500g/l) présente des alvéoles de profondeur importante et irrégulière. Comparativement, un plastisol plongé dans un bain de satinage peu concentré en anhydride chromique (par exemple de l'ordre de 50 g/l) comprend un nombre d'alvéoles plus important, mais de profondeur plus faible, rendant la surface du plastisol plus facilement métallisable (figure 1 B). Avec une surface peu fissurée, la rétention du chrome est plus faible, et l'action du palladium plus marquée ce qui favorise le dépôt de métal à la surface du plastisol.

Or, la nécessité de diminuer la concentration en CrO₃ dans le mélange sulfochromique (mélange d'acide sulfurique et d'anhydride chromique) des bains de satinage correspond à une contrainte justifiée notamment par l'apparition de nouvelles normes anti-pollution, dont on peut citer à titre d'exemple la directive européenne SEVESO 2.

Cette contrainte accentue le besoin pour des plastisols capables de ne pas se recouvrir de métal lors du dépôt chimique de métal, même lorsque la concentration en CrO₃ dans le mélange sulfochromique utilisée est faible.

Les inventeurs ont découvert que l'ajout d'un sel métallique au plastisol permet de limiter, voire empêcher la catalyse du dépôt de métal sur le plastisol par le palladium colloïdal.

L'invention concerne l'utilisation d'un plastisol destiné à protéger un outillage de galvanoplastie contre la métallisation, comprenant au moins une résine et un mélange plastifiant. Selon l'invention, le plastisol comprend en outre, un additif contenant au moins un sel métallique limitant voire empêchant la métallisation dudit plastisol.

Un tel plastisol convient particulièrement lorsqu'on utilise des bains de satinage comprenant moins de 500g/L d'anhydride chromique dans le mélange sulfochromique, de préférence moins de 100g/L et idéalement 50g/L ou moins.

Les plastisols utilisés peuvent être tout plastisol classique, et en particulier ceux comprenant au moins une résine de poly(chlorure de vinyle) telles que des résines homopolymères ou copolymères poly(chlorure de vinyle/acétate de vinyle) ou encore une résine acrylique. Les plastisols préférés comprennent une ou plusieurs résines de PVC.

Le plastifiant est choisi parmi les phtalates de dibutyle , des phtalates mixtes de benzyle-butyle, les phtalates de di(2-éthylhexyle), les phtalates de dihexyle, les phtalates de diisononyle et leurs mélanges. Un mélange de plastifiants particulier, convenant à la réalisation d'un plastisol selon l'invention est un mélange de diisononylphtalate, d'adipate de diisononylphtalate et de triméthyl pentanediol diisobutyrate.

Le sel métallique est choisi de préférence parmi les sels de plomb, les chromates, et en particulier les chromates de plomb et leurs mélanges.

Un additif particulier est un mélange de chromate de plomb, de molybdate de plomb, et de sulfate de plomb, celui-ci est commercialisé sous la dénomination HEUCOTRON® .

Cet additif est dispersé au sein du plastisol lors de sa fabrication et notamment lors d'une étape d'empatage sous vide du plastisol ou lors d'une étape de dispersion des poudres dans le plastifiant.

La concentration en additif dans le plastisol exprimée en parties pour cent en poids de résine (pcr) est comprise entre 2,5 et 7,5, de préférence comprise entre 4 et 6.

Un plastisol préféré selon l'invention répond à la composition suivante, exprimée en parties en poids :

| | |
|---|---|
| Résine | 100 |
| Sel métallique | 2,5 à 7,5 |
| Plastifiant | 45 à 60. |

Un plastisol selon l'invention peut comprendre en outre, un ou plusieurs adjuvants choisis parmi les stabilisants, les agents de charge, les colorants, les agents gonflants, les émulsifiants, les agents d'ajustage de la viscosité, les agents de démoulage, les agents matant, les agents anti-statiques, les agents fongicides, les agents de dégazage les stabilisants thermiques, les agents améliorant la tenue au feu, les mélanges de ceux-ci, et plus généralement des mélanges thixotropiants facilitant l'application des plastisols sur les supports destinés à être revêtus par trempage.

Les plastisols convenant pour l'invention peuvent éventuellement comprendre des résines d'addition telles que des styrène-acrylonitriles (SAN), des acrylonitrile-butadiène-styrènes (ABS), des caoutchoucs butyl synthétiques (SBR), ou des polyéthylène chlorés (CPE).

Le plastisol peut également être de type « haute température ».

En dosant le pourcentage de plastifiants par rapport aux résines PVC, on obtient plusieurs types de plastisols qui conviennent à la réalisation de l'invention. Une première catégorie comprend les plastisols dits « mous » qui possèdent une résistance à la rupture après cuisson, comprise entre 125 et 165 kg/cm². Une deuxième catégorie comprend les plastisols dits « durs » qui possèdent une résistance à la rupture après cuisson comprise entre 49 et 54 kg/cm².

Par ailleurs, les plastisols convenant pour l'invention présentent généralement une dureté Shore A, comprise entre 73 et 77.

En ce qui concerne le mode détaillé de fabrication des plastisols selon l'invention et leurs applications, l'homme du métier pourra se référer utilement à l'ouvrage suivant :
- Techniques de l'ingénieur, volume A9, page 3710 et suivantes, au chapitre « plastisol et mise en oeuvre » par R. ARLOTTO.

Par «outillage de galvanoplastie », l'homme du métier comprendra les montages d'électrolyse, les montages destinés à maintenir dans les bains de satinage, les pièces que l'on désire revêtir d'un métal et de manière générale tous les éléments à protéger des bains de satinage.

Un plastisol selon l'invention peut être composite et comprendre au moins deux couches de plastisol ; une première couche interne en contact avec l'outillage de galvanoplastie, et une couche externe recouvrant la couche interne. Dans ce cas l'additif est dispersé préférentiellement dans la deuxième couche, externe. Un plastisol composite est décrit notamment dans la demande de brevet EP0607717 et comprend une première couche de plastisol standard comprenant 70% de plastifiant et une seconde couche de plastisol « dur » contenant 35 à 40 % plastifiant. Grâce à un tel revêtement la couche supérieure de plastisol « dur », pauvre en mélange plastifiant, est régénérée par la couche inférieure, riche en mélange plastifiant. La couche supérieure de plastisol, au sein de laquelle l'additif est préférentiellement dispersé, peut répondre à la composition décrite dans le brevet FR 2.456.131 déposé par la société SERME.

Alternativement, un plastisol composite peut comprendre trois couches de plastisol comme cela est décrit dans la demande de brevet EP0607717. Un plastisol composite peut comprendre deux premières couches de plastisols identiques à celles décrites ci-dessus, et une troisième couche de plastisol, classique, de type mou recouvrant les deux couches précédentes.

L'invention concerne également un outillage de galvanoplastie revêtu d'un plastisol selon l'invention, et en particulier revêtu d'un plastisol composite tel que défini ci-dessus.

Parmi les substrats destinés à être métallisés, on peut citer en premier lieu les ABS. Parmi, tous les ABS disponibles, les grades d'ABS spécifiques « spécial chromage », sont particulièrement préférés. Ils sont spécialement formulés et possèdent un ratio copolymères-nitrile-styrène et butadiène optimal.

Parmi les substrats destinés à être métallisés, on peut citer aussi les polyamides, et en particulier les PA6 ; PA6,6 ; PA4,6 PA6,10 ; PA6,12 ; PA11 ; PA12, le Minlon IIC-40® de la société Dupont de Nemours, et les polyamides semi-aromatiques de la société EMS, de grades spécifiques développés pour le chromage.

D'autres substrats sont métallisable comme les polyoxyméthylènes (POM) ou encore les polyacétals, sous forme homopolymère et copolymère, les alliages ABS/polycarbonate et en particulier les alliages comprenant 45% de polycarbonate et 55% d'ABS, les polypropylènes et en particulier le grade chromable HV4 4019G ® de la société Codiplast (RTP France), les polyphénylène-oxyde (PPO) tels que le Noryl® de la société General Electric Company.

Le revêtement des outillages de galvanoplastie par le plastisol selon l'invention peut être réalisé suivant une technique de trempage connue de l'homme du métier, décrite dans le brevet FR-2.456.131 et décrite brièvement ci-après :

Tout d'abord les supports à recouvrir sont dégraissés par les produits organiques connus en soi, puis ils sont rincés et séchés. Ensuite, ces supports sont revêtus par une sous couche d'adhérence également connue en soi. Le support subit ensuite un préchauffage à une température de l'ordre de 180°C à 220°C suivant les dimensions de celui-ci, puis on procède au trempage dans le bain de plastisol, et on remonte le support à une vitesse de l'ordre de 1 cm/min pour éviter la formation de coulures sur celui-ci. Le support revêtu ainsi obtenu subit ensuite une cuisson à une température de l'ordre de 160 à 200°C, de préférence de l'ordre de 190°C environ, pendant approximativement une demi-heure à 45 min suivant les épaisseurs.

Cependant, il est tout à fait envisageable de mettre en oeuvre un procédé de revêtement des outillages de galvanoplastie dont les caractéristiques comme la cuisson du plastisol ou la température du support à revêtir sont différentes de celles décrites ci-dessus.

Alternativement, le revêtement des supports par le plastisol selon l'invention pourra être réalisé en déposant deux couches de plastisol ou plus, comme cela est décrit dans le brevet EP0607717.

D'autres avantages apparaîtront à la lumière des exemples suivants et des figures représentant respectivement :
figure 1A : Un schéma de la surface d'un plastisol plongé dans un bain de satinage concentré en CrO₃ dans le mélange sulfochromique (500g/L) ;
figure 1B : Un schéma de la surface d'un plastisol plongé dans un bain de satinage faiblement concentré en CrO₃ dans le mélange sulfochromique (50g/L) ;
figure 2 : Un schéma de principe de l'action du palladium colloïdal lors de la métallisation d'une pièce en matière plastique ; et
Figure 3 : un détail de la pièce à métalliser représentée sur la figure 2.

### Exemple 1 : Composition d'un bain de satinage chimique acide.

Parmi les formulations de satinage en milieu acide, les formulations constituées d'anhydride chromique et d'acide sulfurique sont les plus utilisées. La composition décrite ci-après est particulièrement adaptée au satinage des ABS, ABS/PC, PC, Noryl et polypropylènes :
- Anhydride chromique (CrO₃) 360-400 g/l
- Acide sulfurique (H₂SO₄ d :1.83) 320_380 g/l
- Crome trivalent 0-35g/l
- Tensio actif fluoré q.s.p

La température de traitement est de 62 à 68°C, la durée de traitement est comprise entre 2 et 15 minutes, sous agitation moyenne à l'air surpressé, suivie d'une réoxydation électrolytique continue du Cr^{III} et d'une décantation ou filtration périodique sur filtre tissus Téflon® à froid.

### Exemple 2 : Composition d'un bain de satinage chromique.

Pour la constitution de gammes spéciales, où la recherche d'une adhérence élevée est essentielle, l'usage de satinage tout chrome est recommandé. Le procédé Crown Plate ® de la société Shipley donne les concentrations suivantes :

| | |
|---|---|
| CrO₃ : | de 1140 à 1175 g/l |
| Densité à 23°C | de 1,70 à 1,85 |
| Température | 64 à 68°C |
| Durée de traitement | 5 à 10 minutes. |

La surface des ABS satinés par cette gamme est très régulière et la gravure chimique très progressive.

### Exemple 3 : Composition d'un bain de satinage alcalin non oxydant.

Les compositions de ce type comprennent soit de l'hydroxyde de sodium (NaOH) soit de l'hydroxyde de potassium (KOH). Des considérations économiques privilégient la soude au détriment de la potasse plus coûteuse mais moins dangereuse à manipuler. Les matériaux sensibles à ce type de satinage sont par exemple les polyamides, les polycarbonates, et les polyesters de type PBT, ces satinages sont souvent associés à de gammes complexes oxydantes ou à des solvants.

Concentration et conditions de traitement type:
NaOH : 250-350g/l
La température de traitement est de 80-95°C, et la durée du traitement est de 5 à 30 minutes

### Exemple 4 : Principe de la métallisation d'une pièce en matière plastique.

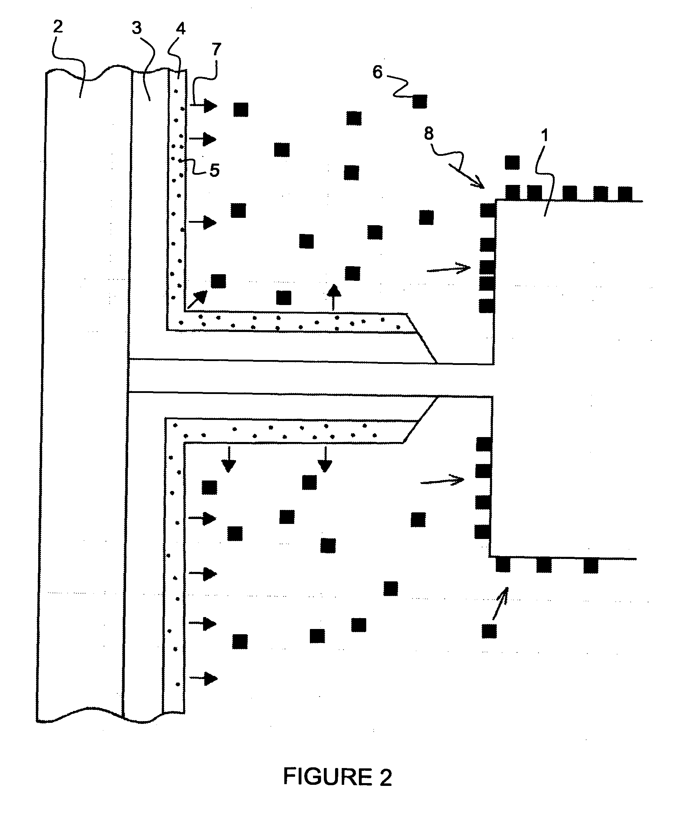

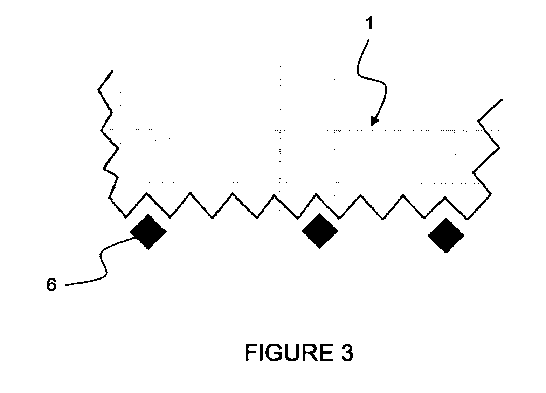

Cet exemple se réfère à la figure 2 sur laquelle sont représentés une pièce à traiter 1 portée par un support galvanique métallique 2 recouvert d'une première couche de plastisol PVC mou 3 et d'une deuxième couche de plastisol PVC dur 4 selon l'invention. Le plastisol 4 comprend des particules de chromate de plomb schématisées par des cercles pleins 5. Le palladium colloïdal est représenté par des carrés pleins 6 au sein d'un bain de traitement. Le palladium 6 est repoussé par le support galvanique 2 traité par le plastisol 4 contenant du chromate de plomb (flèches 7) et attiré sur les micropores de la surface de la pièce à traiter 1 (flèches 8). Le palladium 6 attiré sur les micropores de la surface de la pièce à traiter 1 est représenté plus en détail sur la figure 3.

### Exemple 5 : composition d'un plastisol selon l'invention.

Les concentrations indiquées ci-après sont exprimées en parties en poids.

| | |
|---|---|
| SOLVIN 372 NF® (résine PVC) | 45 |
| SOLVIN 374 MB® (résine PVC) | 55 |
| DINP (diisononylphtalate) (plastifiant) | 44,1 |
| DINA.Z (adipate de diisononylphtalate) (plastifiant) | 6,10 |
| Triméthyl pentanediol diisobutyrate (plastifiant) | 2,50 |
| Silice Pyrogénée (agent de charge) | 0,45 |
| Chromate de molybdate et de sulfate de plomb | 5 |
| pigment bleu | 2,53 |
| Alcool benzylique (agent de réglage de la viscosité) | 2 |
| Stéarate d'octyle (agent de réglage de la viscosité) | 4 |
| BYK 3155® (agent de dégazage) | 0,2 |
| CALOXOL CPA® (absorbeur d'humidité) | 0,5 |
| MARKSTAB BZ530® (stabilisant thermique) | 2 |
| IRCOGEL 903® (agent de rhéologie) | 1,7 |

### Exemple 6 : Revêtement d'un montage d'électrolyse par une couche de plastisol selon l'invention.

Le procédé comporte les étapes suivantes :
a) Préparation de l'outillage : sablage, dégraissage à l'aide de vapeurs de trichloroéthylène, rinçage avec de l'eau et séchage.
b) Application au pistolet d'une sous couche d'adhérence sur l'outillage suivie d'un séchage du revêtement pendant 15 minutes à température ambiante.
c) Préchauffage de l'outillage dans une étuve à une température comprise entre 180°C et 200°C pendant 30 minutes.
d) Trempage de l'outillage chaud dans le bain de plastisol répondant à la composition de l'exemple 5.
e) L'outillage est égoutté lentement en le sortant dudit bain à une vitesse comprise entre 1 et 5 cm/minute, l'égouttement est important pour obtenir un revêtement fin et homogène sans coulure.
f) L'outillage est chauffé dans une étuve à 180°C pendant 45 minutes.

On obtient ainsi un montage d'électrolyse selon l'invention qui résiste bien à une métallisation même lors de l'utilisation de bains de satinage à faible concentration en CrO₃ dans le mélange sulfochromique.

## Revendications

1. Utilisation pour limiter, voire empêcher une métallisation chimique du plastisol recouvrant des outils de galvanoplastie lors d'une opération de métallisation par galvanoplastie de pièces en matière plastique, d'un plastisol comprenant au moins une résine et un mélange plastifiant ainsi qu'un additif contenant au moins un sel métallique limitant voire empêchant ladite métallisation dudit plastisol.

2. Utilisation selon la revendication 1, **caractérisée en ce que** le sel métallique utilisé dans le plastisol est choisi parmi les chromates.

3. Utilisation selon la revendication 2, **caractérisée en ce que** le sel métallique utilisé dans le plastisol comprend du chromate de plomb.

4. Utilisation selon la revendication 3, **caractérisée en ce que** l'additif comprend du chromate de plomb, du molybdate de plomb et du sulfate de plomb.

5. Utilisation selon l'une quelconque des revendications 1 à 4, **caractérisée en ce que** l'additif a une concentration, exprimée en parties pour cent en poids de résine (pcr) comprise entre 2,5 et 7,5, de préférence comprise entre 4 et 6.

6. Utilisation selon l'une quelconque des revendications 1 à 5, **caractérisée en ce que** le plastisol répond à la composition suivante, exprimée en parties en poids :
| | |
|---|---|
| Résine | 100 |
| Sel métallique | 2,5 à 7,5 |
| Plastifiant | 45 à 60. |

7. Utilisation selon l'une quelconque des revendications 1 à 6, **caractérisée en ce que** le plastisol comprend, en outre, un adjuvant choisi parmi les stabilisants, les agents de charge, les colorants, les agents gonflants, les émulsifiants, les agents d'ajustage de la viscosité, les agents de démoulage, les agents matant, les agents anti-statiques, les agents fongicides, les agents de dégazage les stabilisants thermiques, les agents améliorant la tenue au feu et les mélanges de ceux-ci.

8. Utilisation selon l'une quelconque des revendications 1 à 7, **caractérisée en ce que** le sel métallique est dispersé au sein du plastisol lors d'une étape d'empattage sous vide du plastisol.

9. Utilisation selon l'une quelconque des revendications 1 à 8, **caractérisée en ce que** le plastisol présente une dureté Shore A, comprise entre 73 et 77.

10. Utilisation selon l'une quelconque des revendications 1 à 9, **caractérisée en ce que** la résistance à la rupture du plastisol, après cuisson, est comprise entre 125 et 165 kg/cm².

11. Utilisation selon l'une quelconque des revendications 1 à 9, **caractérisée en ce que** la résistance à la rupture du plastisol, après cuisson, est comprise entre 49 et 54 kg/cm².

12. Utilisation selon l'une quelconque des revendications 1 à 11, **caractérisée en ce que** le plastisol comprend une résine de poly(chlorure de vinyle).

13. Utilisation selon l'une quelconque des revendications 1 à 11, **caractérisée en ce que** le plastisol comprend une résine acrylique.

14. Utilisation selon l'une quelconque des revendications 1 à 13, **caractérisée en ce que** le plastisol est de type haute-température.

15. Utilisation selon l'une quelconque des revendications 1 à 14, **caractérisée en ce qu'**elle comporte une opération de satinage qui comprend une étape de traitement de la pièce en matière plastique dans un bain contenant un mélange sulfochromique.

16. Utilisation selon la revendication 15, **caractérisée en ce que** ledit bain comprend moins de 500 g/L d'anhydride chromique, de préférence moins de 100 g/L, et idéalement 50g/L ou moins.

17. Utilisation selon l'une quelconque des revendications 1 à 16, **caractérisée en ce que** l'opération de métallisation comprend une étape de trempage dans un bain de catalyse comprenant du palladium colloïdal.

## Claims

1. The use, for limiting or even preventing a chemical metallisation of the plastisol covering electro latin tools during an operation of electroplating métallisation of plastic arts, of a plastisol comprising at least a resin and a plasticizer mixture as well as an additive containing at least one metallic salt limiting, or even preventing, said métallisation of said plastisol.

2. The use according to claim 1, **characterized in that** the metallic salt used in the plastisol is chosen among the chromates.

3. The use according to claim 2, **characterized in that** the metallic salt use in the plastisol comprises lead chromate.

4. The use according to claim 3, **characterized in that** the additive comprises lead chromate, lead molybdate and lead sulphate.

5. The use according to any one of claims 1 to 4, **characterized in that** the additive has a concentration, expressed in parts per hundred resin (phr) by weight comprised between 2.5 and 7.5, preferably comprised between 4 and 6.

6. The use according to any one of claims 1 to 5, **characterized in that** the plastisol has the hollowing composition, expressed in parts by weight:
| | |
|---|---|
| Resin | 100 |
| Metallic salt | 2.5 to 7.5 |
| Plasticizer | 45 to 60. |

7. The use according to any one of claims 1 to 6, **characterized in that** plastisol further comprises an adjuvant chosen among the stabilizers, filling agents, dyes, swelling agents, emulsifiers, viscosity adjustment agents, release agents, matting agents, anti-static agents, fungicide agents, degassing agents, heat stabilizers, flame retardant agents, and the mixtures thereof.

8. The use according to any one of claims 1 to 7, **characterized in that** the metallic salt is dispersed within the plastisol during a step of vacuum kneading of the plastisol.

9. The use according to any one of claims 1 to 8, **characterized in that** the plastisol has a Shore-A hardness comprised between 73 and 77.

10. The use according to any one of claims 1 to 9, **characterized in that** the tensile strength of the plastisol, after curing, is comprised between 125 and 165 kg/cm².

11. The use according to any one of claims 1 to 9, **characterized in that** the tensile strength of the plastisol, after curing, is comprised between 49 and 54 kg/cm².

12. The use according to any one of claims 1 to 11, **characterized in that** the plastisol comprises a polyvinyl chloride resin.

13. The use according to any one of claims 1 to 11, **characterized in that** the plastisol comprises an acrylic resin.

14. The use according to any one of claims 1 to 13, **characterized in that** the plastisol is of the high-temperature type.

15. The use according to any one of claims 1 to 14, **characterized in that** it comprises a glazing operation that includes a step of processing the plastic part in a bath containing a sulfochromic mixture.

16. The use according to claim 15, **characterized in that** said bath comprises less than 500 g/l of chromic anhydride, preferably less than 100 g/l, and ideally 50 g/l or less.

17. The use according to any one of claims 1 to 16, **characterized in that** the metallisation operation comprises a step of dipping into a catalysis bath comprising colloidal palladium.

## Patentansprüche

1. Verwindung eines Plastisols umfassend mindestens ein Harz und eine Weichmachermischung sowie einen Zusatzstoff, der mindestens ein Metallsalz enthält, welches die Metallisierung des Plastisols einschränkt oder sogar verhindert, um bei einem Vorgang der galvanotechnischen Metallisierung von Kunststoffteilen eine chemische Metallisierung des Plastisols, das galvanotechnische Werkzeuge bedeckt, einzuschränken oder sogar zu verhindert.

2. Verwerdung nach Anspruch 1, **dadurch gekennzeichnet, dass** das Metallsalz, welches in dem Plastisol verwendet wird, aus chromate ausgewählt ist.

3. Verwendung nach Anspruch 2, **dadurch gekennzeichnet, dass** das Metallsalz, welches in dem Plastisol verwendet wird, Bleichromat umfasst.

4. Verwenden nach Anspruch 5, **dadurch gekennzeichnet, dass** der zusatzstoff Bleichromat, Bleimolybdat und Bleisulfat umfasst.

5. Verwindung nach einem beliebigen der Anspruche 1 bis 4, **dadurch gekennzeichnet, dass** die Konzentration des Zusatzstoffs, ausgedrückt Teilen auf hundert Gewichtsteile an Harz (thh), im Bereich von 2,5 bis 7,5, vorzugsweise von 4 bis 6, liegt.

6. Verwendung nach einem beliebigen der Anspruche 1 bis 5, **dadurch gekennzeichnet, dass** das Plastisol der folgenden Zusammensetzung, ausgedrückt in Gewichtsteilen, entspricht:
| | |
|---|---|
| Harz | 100 |
| Metallsalz | 2,5 7,5 |
| Weichmacher | 45 bis 60. |

7. Verwendung nach einem beliebigen der Anspräche 1 bis 6, **dadurch gekennzeichnet, dass** Plastisol darüber hinaus einen Hilfsstoff umfasst, der aus den Stabilisatoren, den Füllstoffen, den Farbstoffen, den Quellmitteln, Emulgatoren, den Viskositätsreglern, den Formtrennmitteln, Mattierungsmitteln, den Antistatika, den Fungiziden, Entgasungsmitteln, den Wärmestabilisatoren, den Mitteln zur Verbesserung der Feuerfestigkeit und den Mischungen daraus ausgewählt ist.

8. Verwindung nach eine beliebigen der Ansprüche 1 bis 7, **dadurch gekennzeichnet, dass** Metallsalz bei einem Schritt des Anrührens es Plastisol unter Vakuum innerhalb des Plastisols dispergiert wird.

9. Verwendung nach einem beliebigen der sprüche 1 bis 8, **dadurch gekennzeichnet, dass** das Plastisol eine Shore-A-Härte im Bereich von 73 bis 77 aufweist.

10. Verwendung nach einem beliebigen der sprüche 1 bis 9, **dadurch gekennzeichnet, dass** die Reißfestigkeit des Plastisols nach wärmebehandlung im Bereich von 125 bis 165 kg/cm² liegt.

11. Verwendung nach einem beliebigen der Ansprüche 1 bis 9, **dadurch gekennzeichnet, dass** die Reißfestigkeit plastisol nach der Wärmebehandlung im Bereich von 49 bis 54 kg/cm² liegt.

12. Verwendung nach einem beliebigen der sprüche 1 bis 11, **dadurch gekennzeichnet, dass** plastisol ein Polyvinylchloridharz umfasst.

13. Verwerdung nach einem beliebigen der sprüche 1 bis 11, **dadurch gekennzeichnet, dass** das Plastisol ein Acrylharz umfasst.

14. Verwenden nach einem beliebigen der Ansprüche 1 bis 13, **dadurch gekennzeichnet, dass** plastisol vom Hochtemperaturtyp ist.

15. Verwendung nach einem beliebigen der Sprüche 1 bis 14, **dadurch gekennzeichnet, dass** sie einen Satinierungsvorgang aufweist, der einen Schritt der Behandlung des Kunststoffteils in einem Bad umfasst, welches Chromschwefelsäure enthält.

16. Verwerdung nach Anspruch 15, **dadurch gekennzeichnet, dass** das Bad weniger als 500 g/L an Chromtrioxid, vorzugsweise weniger als 100 g/L und idealerweise 50 g/L oder weniger umfasst.

17. Verwendung nach einem beliebigen der Ansprüche 1 bis 16, **dadurch gekennzeichnet, dass** der Metallisierungsvorgang einen Schritt des Eintauchens in ein katalytisch wirkendes Bad umfasst, das kolloidales Palladium umfasst.
